# EUROPEAN PATENT APPLICATION

(11) **EP 3 854 893 A1**
(43) Date of publication of application: **28.07.2021**
(21) Application number: 20305053.9
(22) Date of filing: 23.01.2020
(51) Int. Cl.: C22B 7/00, C22B 26/12, C22B 3/16

(54) **PROCESS OF EXTRACTION OF LITHIUM FROM A MATERIAL COMPRISING LITHIUM AND AT LEAST ANOTHER METAL**

(71) Applicant: Universite de Rouen Normandie, 76130 Mont-Saint-Aignan (FR); Institut National des Sciences Appliquées de Rouen (INSA), 76800 Saint-Etienne du Rouvray (FR); Centre National de la Recherche Scientifique, 75016 Paris (FR); Ecole Nationale Supérieure d'Ingénieurs de Caen, 14000 Caen (FR); Université de Caen Normandie, 14000 Caen (FR)
(72) Inventor: AYADI, Firas, 76100 ROUEN (FR); NACHBAUR, Virginie, 27400 TERRES DE BORD (FR); PRALONG, Valérie, 14000 CAEN (FR)
(74) Representative: Gevers & Orès

(57) **Abstract**

The present invention is in the field of the extraction of lithium from a material comprising lithium and at least another metal. In particular, the invention concerns a process of extraction of lithium at least, from a material comprising lithium and at least another metal.

## Description

The present invention is in the field of the extraction of lithium from a material comprising lithium and at least another metal. In particular, the invention concerns a process of extraction of lithium at least, from a material comprising lithium and at least another metal.

Lithium and its compounds have several industrial applications, including heat-resistant glass and ceramics, lithium grease lubricants, flux additives for iron, steel and aluminum production, lithium batteries and lithium-ion batteries, especially for the automotive industry for the last two applications. These uses consume more than three quarters of lithium production.

Lithium-ion batteries are currently undergoing significant development due to their energy potential, manufacturing process and low cost. These batteries are used in electronic equipment, but also in most cases are the batteries used in electric vehicles.

In particular, the electric vehicles could represent between 35% and 50% of all the vehicles sales in 2040 and as a result, the evolution of lithium consumption follows the same trends as the electric vehicle penetration. The total demand for lithium by 2050 is therefore estimated at about 14 million tons a year according to a recent study by ADEME and IFPen.

Lithium salts may be extracted from water in mineral springs, brine pools, and brine deposits. Today, brine excavation is probably the most widely used lithium extraction technology. However, at least two problems with lithium brine production are emerging: reliability and geography. Indeed, weather has clear impacts on the production at lithium brine operations and with global demand for lithium on the rise, more reliable and consistent methods of production will be required. But lithium brine operations are limited to selected climates and regions that can support sufficient weather to ensure economic processing.

Hard rock lithium deposits may fill the demand as they are more evenly geographically distributed across the globe and are less dependent on a changing climate for production.

Although lithium occurs in a wide variety of minerals and ores, there are only a relatively few ores that are sufficiently available and contain a sufficient amount of lithium to make them attractive as a commercially practicable source of lithium. Among these commercially practicable sources of lithium, spodumene is the mineral that attracts the most interest and various processes for recovering the lithium values from spodumene ore have been proposed. Only two processes seem to have been practiced industrially: sintering method and sulfuric acid process, and sulfuric acid process has become the main method for production of lithium carbonate from spodumene due to its high efficiency. However, this process has its intrinsic drawbacks, such as high levels of sulfate and heavy metal ions in the product, sophisticated process for recovering sodium sulfate, etc.

Other processes involve a leaching step with carbon dioxide, in addition to an autoclave-based step. The need of an additional step and the management of the gaseous CO2 make these processes expensive in economic and environmental terms.

In addition to that, valuation of wastes of electrical and electronic equipment (WEEE) also referred to as "*urban mine*" is a booming thematic and represents an important potential source of lithium.

Indeed, in this context of growing demand for lithium, a policy of managing the materials to be recycled can provide a country that does not have access to raw materials (or does not exploit them directly) with the resources necessary for its growth.

In addition, the European Union has begun to take this issue into account, as evidenced by the many directives adopted on the recycling of WEEE, on eco-design and its action plan for the circular economy. In the specific case of batteries, this recycling is governed by Directive 2006/66/EC of the European Parliament and of the Council of 6 September 2006 on batteries and accumulators and waste batteries and accumulators, which stipulates in Article 13 that "Member States shall encourage the development of new recycling and treatment technologies, and promote research into environmentally friendly and cost-effective recycling methods for all types of batteries and accumulators".

Several recycling processes for lithium-ion batteries exist, most of them based on hydrometallurgy or pyrometallurgy. The hydrometallurgy processes use strong acid baths and are very solvent-intensive, which generates high economic and environmental costs. In addition, the use of strong acids for leaching results in the non-selective dissolution of all active electrode components (i.e. lithium and also other metals such as Co, Ni, Mn, etc.). This implies the need for several additional extraction and/or precipitation steps.

The pyrometallurgy requires high heating (700 to 1000°C or even higher) of the compounds to extract them, which requires a lot of energy, again with high economic and environmental costs.

Some processes use deep eutectic solvents for cathode recycling of Li-ion batteries. But again, these processes involve a complete dissolution of the elements present in the cathode materials, for example Co, Ni, and/or Mn in addition of Li. It is therefore necessary to carry out selective precipitation treatments to isolate Li from the other metals.

Other processes involve the heating in water, in the presence of an oxidizing agent such as hydrogen peroxide and carbon dioxide, or the use of a volatile organic solvent and an acid. However, the need of extra steps, the management of the gaseous CO2 or the organic solvent and the handling and subsequent treatment of the oxidant or the acid make these processes expensive in economic and environmental terms.

Accordingly, it is an object of the present invention to provide a process of extraction of lithium that does not require the use of hazardous chemicals and/or chemical that require waste post-treatment, but also an economically viable process, in particular one that uses little energy and is environmentally friendly.

A further goal of the present invention is to provide, in the case of the extraction of a lithium source containing other metals, a process in which lithium is easily separated from these other metals.

Thus, in one aspect, the present invention relates to a process of extraction of lithium at least, from a material comprising lithium and at least another metal, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1.

The present invention also relates to a process of extraction of lithium at least, from a material comprising lithium and at least another metal, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1;
**e)** Contacting the solid S 1 with water to obtain a composition SP2;
**f)** Separating the liquid L2 containing lithium carbonate and the solid S2 forming the composition SP2 obtained in step e);
**g)** Optionally, isolating solid lithium carbonate from the liquid L2.

In a particular embodiment, the solid S2 contains the at least another metal.

In a particular embodiment, the at least another metal is chosen from transition metals and post-transition metals, in particular from Co, Ni, Mn, Fe, Ti and Al, in particular from Co, Ni, Mn and Al.

In a particular embodiment, the material is a lithium-ion battery cathode material, in particular chosen from:
- lithium and cobalt containing lithium-ion battery cathode material, in particular LiCoO₂;
- lithium and manganese containing lithium-ion battery cathode material, in particular LiMn₂O₄;
- lithium, nickel, manganese and cobalt containing lithium-ion battery cathode material, in particular LiNi_{0,33}Mn_{0,33}Co_{0,33}O₂;
- lithium, nickel, cobalt and aluminum containing lithium-ion battery cathode material, in particular LiNi_{0,8}Co_{0,15}Al_{0,05}O₂;
- lithium and titanium containing lithium-ion battery cathode material, in particular Li₄Ti₅O₁₂;
- lithium and iron containing lithium-ion battery cathode material, in particular Li₃Fe₂(PO₄)₃;
- the mixtures of at least two of the materials listed above.

The lithium-ion battery cathode material is for example an used cathode, production scrap or non-compliant material. The lithium-ion battery cathode material can notably be a crushed used cathode, a lithium containing composition of an used cathode, or an aluminum foil coated with a lithium composition as found in used lithium-ion battery cathodes.

In a particular embodiment, the material is a lithium ore, in particular spodumene (more particularly LiAlSi₂O₆), petalite (more particularly LiAlSi₄O₁₀), lepidolite (more particularly K(Li,Al)₃(Si,Al)₄O₁₀(F,OH)₂), eucryptite (more particularly LiAlSiO₄), amblygonite (more particularly (Li,Na)AlPO₄(F,OH)), or a mixture thereof.

When the lithium ore material is spodumene, said spodumene is preferably calcinated prior to step a). This calcination is well known from those skilled in the art, and enables the conversion of alpha-spodumene into beta-spodumene

In a particular embodiment, the material is in powder form. More particularly, the material is in the form of a composition comprising a plurality of particles having a size ranging from 1 to 1000 µm, notably from 1 to 100 µm.

When the material is a lithium-ion battery cathode material, said material is usually already in powder form within the lithium-ion battery cathode.

When the material is a lithium ore, it may be powdered in a powder form as defined above prior to step a).

In a particular embodiment, the polyol solvent is chosen from the group comprising ethylene glycol, diethylene glycol, triethylene glycol, tetraethylene glycol, propylene diol, liquid polyethylene glycols, such as polyethylene glycol 200 to 600, butylene glycol, in particular 1,3-butylene glycol and 1,4- butylene glycol, hexylene glycol and glycerol.

In a particular embodiment, the polyol solvent is anhydrous. By anhydrous is notably meant that the polyol solvent contains 5% or less, in particular 4% or less, 3% or less, 2% or less, 1% or less, 0.5% or less, 0.4% or less, 0.3% or less, 0.2% or less, or 0.1% or less, in weight of water, more particularly 1% or less than 1% in weight of water.

In a particular embodiment, the carbonate is at least one metal carbonate, in particular at least one alkali metal carbonate, more particularly sodium carbonate, potassium carbonate or their mixtures.

In a particular embodiment, the mass concentration of said material in the polyol solvent ranges from 1 to 100 g/L, in particular from 5 to 50 g/L, more particularly from 10 to 20 g/L, for example of about 16 g/L.

In a particular embodiment, the weight ratio of said material over said carbonate ranges from 0.1 to 10, in particular from 0.2 to 5. In a particular embodiment, said process is performed in the absence of an acid, in particular a strong acid, for example hydrochloric acid, nitric acid or sulfuric acid, of carbon dioxide, of an oxidant, in particular hydrogen peroxide, ozone, persulfate salts, and of volatile organic solvents, for example acetone, acetonitrile, benzene, 1-butanol, acetic acid, chloroform, t-butanol, cyclohexane, carbon tetrachloride, ethyl acetate, dimethyl sulfoxide, dichloromethane, ethanol, diethyl ether, isopropyl acetate, heptane, dichloroethane, 2-propanol, isooctane, di-isopropyl ether, 1-propanol, methylcyclohexane, dimethylformamide, ethyl acetate, 2-methylTHF, dioxane, methyl t-butyl ether, dimethyl acetate, methanol, toluene, dimethoxyethane, methyl ethyl ketone, tetrahydrofuran, hexane(s), xylenes, N-methylpyrrolidinone, pentane, and pyridine.

Contacting step a) can be performed according to any techniques well known from the one skilled in the art, in particular by mechanical, magnetic or manual stirring and/or by ultrasound treatment.

In a particular embodiment, the polyol solvent corresponds to a liquid L1 of the step a) of a previous extraction according to the present invention. This embodiment corresponds to a recycling of the polyol solvent used in the framework of the present invention.

The solvothermal treatment of step b) can be performed according to any techniques well known from the one skilled in the art, in particular by using an autoclave, more particularly a stainless steel autoclave.

The configuration of said autoclave can be a batch, semi-batch or continuous configuration. Such configurations are well known from the one skilled in the art.

In a particular embodiment, the solvothermal treatment of step b) is performed at a temperature over the boiling point of the polyol solvent and under 500°C.

In a particular embodiment, the solvothermal treatment of step b) is performed at a temperature from 200 to 500°C, in particular from 220 to 500°C, more particularly from 220 to 400°C, for example at about 225°C.

In a particular embodiment, the solvothermal treatment of step b) is performed at a pressure above atmospheric pressure, for example 1.013 bar, and equal to or less than 5000 bar, in particular at a pressure ranging from 10 to 500 bar, more particularly at about 125 bar.

In a particular embodiment, the solvothermal treatment of step b) is performed for 1 hour to 1 week, in particular from 2 hours to 5 days, more particularly from 4 to 80 hours, notably when said autoclave is in batch configuration.

In a particular embodiment, the solvothermal treatment of step b) is performed for 0.25 hour to 24 hours, in particular from 0.5 hour to 10 hours, notably when said autoclave is in continuous configuration.

Separating step c) can be performed according to any techniques well known from the one skilled in the art, in particular by centrifugation, filtration and/or decantation, more particularly by centrifugation.

Step d) can be performed according to any techniques well known from the one skilled in the art, in particular by evaporation of the polyol solvent, more particularly under reduced pressure.

In an advantageous embodiment, the solid S1 obtained in step c) is prior to step e) washed with a solvent in which lithium carbonate is not soluble. This solvent is in particular chosen from alcohol solvents, for example ethanol or propanol, and ketone solvents, for example acetone. For example, this washing can be performed by contacting solid S1 with ethanol under ultrasounds, washed solid S1 being then separated from the liquid, notably by centrifugation.

Contacting step e) can be performed according to any techniques well known from the one skilled in the art, in particular by mechanical, magnetic or manual stirring and/or by ultrasound treatment.

Separating step f) can be performed according to any techniques well known from the one skilled in the art, in particular by centrifugation, filtration and/or decantation, more particularly by centrifugation.

In a particular embodiment, and when the at least another metal is at least a magnetic metal, or at least a magnetic metal and at least a non magnetic metal, the separating step f) may comprise a magnetic separating sub-step f1), to isolate the at least a magnetic metal from the composition SP1, followed by a separating sub-step f2) corresponding to the separating step f) as defined above, to obtain the liquid L2 and a solid S2 containing in particular the at least a non magnetic metal.

Step g) can be performed according to any techniques well known from the one skilled in the art, in particular by evaporation of the water, more particularly under reduced pressure.

The solid S2 can be further dried and/or calcinated according to any techniques well known from the one skilled in the art.

In a more particular embodiment, the present invention concerns the process of extraction of lithium and cobalt from a material consisting of or comprising lithium and cobalt containing lithium-ion battery cathode material, in particular LiCoO₂, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1;
**e)** Contacting the solid S 1 with water to obtain a composition SP2;
**f)** Separating the liquid L2 containing lithium carbonate and the solid S2 containing cobalt forming the composition SP2 obtained in step e);
**g)** Optionally, isolating solid lithium carbonate from the liquid L2.

In a more particular embodiment, the present invention concerns the process of extraction of lithium and cobalt from a material consisting of or comprising lithium, nickel, manganese and cobalt containing lithium-ion battery cathode material, in particular LiNi_{0,33}Mn_{0,33}C_{0,33}O₂, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1;
**e)** Contacting the solid S 1 with water to obtain a composition SP2;
**f1)** magnetic separating of the composition SP2 to isolate a solid containing cobalt and nickel from the composition;
**f2)** Separating the liquid L2 containing lithium carbonate and the solid S2 containing manganese, in particular in MnCO₃ form, forming the composition obtained at the end of step f1);
**g)** Optionally, isolating solid lithium carbonate from the liquid L2.

In a more particular embodiment, the present invention concerns the process of extraction of lithium and manganese containing lithium-ion battery cathode material, in particular LiMn₂O₄, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1;
**e)** Contacting the solid S 1 with water to obtain a composition SP2;
**f)** Separating the liquid L2 containing lithium carbonate and the solid S2 containing manganese, in particular in MnCO₃ and/or Mn₃O₄ form, forming the composition SP2 obtained in step e);
**g)** Optionally, isolating solid lithium carbonate from the liquid L2;
**h)** Optionally, calcinating the solid S2 to obtain a solid S3 containing manganese, in particular in Mn₂O₃ form.

In a more particular embodiment, the present invention concerns the process of extraction of lithium, nickel, cobalt and aluminum containing lithium-ion battery cathode material, in particular LiNi_{0,8}Co_{0,15}Al_{0,05}O₂, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1;
**e)** Contacting the solid S 1 with water to obtain a composition SP2;
**f1)** magnetic separating of the composition SP2 to isolate a solid containing cobalt and nickel from the composition;
**f2)** Separating the liquid L2 containing lithium carbonate and the solid S2 containing aluminium, in particular in CoAlO and/or form, forming the composition obtained at the end of step f1);
**g)** Optionally, isolating solid lithium carbonate from the liquid L2.

In another aspect, the present invention concerns a process of lithium-ion battery cathode recycling comprising the steps as defined above, preceded by a step of recovery of a lithium-ion battery cathode material from a lithium-ion battery cathode or a lithium-ion battery, said steps being optionally followed by a step of use of at least one of the above-mentioned metals in a new process or device.

In another aspect, the present invention concerns a composition comprising:
- a material chosen from lithium-ion battery cathode materials and lithium ores;
- a carbonate; and
- a polyol solvent.

In particular, the composition is a composition for a solvothermal treatment.

It is noted that all the embodiments described above in relation with the processes apply here as well.

In another aspect, the present invention concerns a composition SP1 obtainable by the process as defined above, the material being in particular chosen from lithium-ion battery cathode materials and lithium ores.

In another aspect, the present invention concerns a composition comprising a polyol solvent, in particular ethylene glycol, and a solid composition, said polyol solvent comprising lithium and said solid composition comprising lithium carbonate and cobalt, in particular cobalt alpha and/or cobalt beta.

In another aspect, the present invention concerns a composition comprising a polyol solvent, in particular ethylene glycol, and a solid composition, said polyol solvent comprising lithium and said solid composition comprising lithium carbonate, nickel and cobalt, in particular in the form of a Ni-Co alloy, and manganese carbonate.

In another aspect, the present invention concerns a composition comprising a polyol solvent, in particular ethylene glycol, and a solid composition, said polyol solvent comprising lithium and said solid composition comprising lithium carbonate, manganese carbonate, and manganese oxide, in particular Mn₃O₄. It is noted that all the embodiments described above in relation with the processes apply here as well.

### DEFINITIONS

The following terms and expressions contained herein are defined as follows:
As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

As used herein, the term "about" refers in particular to a range of values within ± 10% of a specific value. For example, the term "about 100" includes values of 100 ± 10%, i.e. values from 90 to 110.

By "compound insoluble in a solvent" is in particularly meant a compound for which the solubility in said solvent, notably at a temperature of 25°C, is equal to or less than 1 g/L, more particularly equal to or less than 0.1 g/L.

### EXAMPLES

### Example 1: Extraction of lithium and other metals according to the invention from lithium-ion battery cathode material

The extraction of lithium and other metals according to the invention from lithium-ion battery cathode material is for instance performed as follows:

### Step 1:

This step is carried out in a solvothermal vessel, for example a steel or titanium vessel, in the presence of ethylene glycol or diethylene glycol and sodium carbonate and/or potassium carbonate.

After dissolving the carbonate in the solvent, lithium-ion battery cathode material (in powder form) is added. The materials tested were as follows: LiCoO₂, LiMn₂O₄, LiNi_{0.33}Mn_{0.33}Co_{0.33}O₂ and Li₃Fe₂(PO₄)₃, and LiNi_{0,8}Co_{0,15}Al_{0,05}O₂. The vessel is then closed and introduced into a heating chamber.

Examples of processing conditions for the different battery materials are summarized in Table 1. The pressure in the vessel was of 125 bar and can be higher than 125 bar, if achievable by the chosen vessel.

| Material | Treatment duration (h) | Treatment temperature (°C) | Treated mass of material (g) | Mass of Na₂CO₃ (g) | Volume of ethylene glycol (mL) |
|---|---|---|---|---|---|
| LiCoO₂ | 5 | 225 | 0.5 | 0,541 | 30 |
| LiNi_{0,33}Mn_{0,33}Co_{0,33}O₂ | 72 | 225 | 0.5 | 0.552 | 30 |
| LiMn₂O₄ | 5 | 225 | 0.5 | 0.15 | 30 |
| Li₃Fe₂(PO₄)₃ | 18 | 225 | 0.5 | 0.19 | 30 |
| LiNi_{0,8}Co_{0,15}Al_{0,05}O₂ | 40 | 225 | 0.5 | 1.1 | 30 |

At the end of this stage, the vessel, after cooling to room temperature, contains a powder in suspension in a liquid. The liquid L1 and powder S1 are separated by centrifugation.

The recovered powder S1 then undergoes the following steps.

### Step 2:

The powder S1 recovered in step 1 may be washed with ethanol: the powder is contacted with ethanol under ultrasound for a few minutes, then separated from the liquid by centrifugation. The purpose of this washing is to remove the residual sodium carbonate and ethylene glycol.

### Step 3:

The powder obtained in step 1 or 2 is then washed with water, to obtain a solid S2 suspended in a water based liquid L2.

The solid S2 is recovered and then dried at 90°C for a maximum of 2 hours.

In the case of LiNi_{0,33}Mn_{0,33}Co_{0,33}O₂, step 3 is slightly modified (**Step 3'**), as the washing is followed by magnetic separation: the powder dispersed in water is placed in the vicinity of a magnet, so as to separate the magnetic and non-magnetic fractions of the powder. In fact, only one of the phases formed during the treatment (the nickel-cobalt alloy) is magnetic and thus attracted by a magnet.

The supernatant liquid L2 then undergoes the next step.

### Step 4:

The liquid L2 is dried under air at 90°C for 3 to 5 hours.

The powders obtained after steps 3 and 4 can possibly be subjected to a last step.

### Step 5:

Calcination under air for 2 hours at 500 or 800°C.

The composition of solid S2 and liquid L2 for some materials is presented in the following table 2.

| Material | Powder S2 | Supernatant L2 dried (s) / calcinated (c) |
|---|---|---|
| LiCoO₂ | Co | (s) Li₂CO₃ |
| LiNi_{0,33}Mn_{0,33}Co_{0,33}O₂ | Magnetic : Ni/Co alloy | (s) Li₂CO₃ |
| | Non magnetic : MnCO₃ | |
| LiMn₂O₄ | MnCO₃/Mn₃O₄ then Mn₂O₃ after heating at 800°C | (c) Li₂CO₃ |

The extraction yields for some materials is presented in the following table 3.

| **Material** | **Li Content of L1** | **Li content of L2** | **Li content of L1+L2** | **Co content of S2** | **Ni content of S2** | **Mn content of S2** |
|---|---|---|---|---|---|---|
| **LiCoO₂** | 18.8 % of initial Li | 63.5 % of initial Li | 82.3 % of initial Li | 78.8 % of initial Co | --- | --- |
| **LiNi_{0,33}Mn_{0,33}Co_{0,33}O₂** | 73.8 % of initial Li | 25,67 % of initial Li | 99.47 % of initial Li | 75.2 % of initial Co | 76.5 % of initial Ni | 48.1 % of initial Mn |
| **LiMn₂O₄** | 34.7 % of initial Li | 65 % of initial Li | 99.7 % of initial Li | --- | --- | 93.8 % of initial Mn |

It has been found that the yield of extraction of the metals recovered in the form of a powder (Co, Ni, Mn) can be improved by reusing the polyol solvent and the aqueous solution (i.e. by using the L1 and/or L2 liquids of previous processes).

### Example 2: Extraction of lithium from lithium ores

It has been shown that a process that is analogous to the one mentioned in example 1 is successfully performed on lithium ores such as spodumene.

## Claims

1. Process of extraction of lithium at least, from a material comprising lithium and at least another metal, said process comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1.

2. Process according to claim 1, comprising the following steps:
**a)** Contacting said material with a polyol solvent and a carbonate to obtain a reaction mixture;
**b)** Performing a solvothermal treatment of the reaction mixture obtained in step a) to obtain a solvothermally treated composition SP1;
**c)** Separating the liquid L1 containing lithium carbonate and the solid S1 forming the composition SP1 obtained in step b);
**d)** Optionally, isolating solid lithium carbonate from the liquid L1;
**e)** Contacting the solid S 1 with water to obtain a composition SP2;
**f)** Separating the liquid L2 containing lithium carbonate and the solid S2 forming the composition SP2 obtained in step e);
**g)** Optionally, isolating solid lithium carbonate from the liquid L2.

3. Process according to any one of the preceding claims, wherein the at least another metal is chosen from transition metals and post-transition metals, in particular from Co, Ni, Mn, Fe, Ti and Al, in particular from Co, Ni, Mn and Al.

4. Process according to any one of the preceding claims, wherein the material is a lithium-ion battery cathode material, in particular chosen from:
- lithium and cobalt containing lithium-ion battery cathode material, in particular LiCoO₂;
- lithium and manganese containing lithium-ion battery cathode material, in particular LiMn₂O₄;
- lithium, nickel, manganese and cobalt containing lithium-ion battery cathode material, in particular LiNi_{0,33}Mn_{0,33}Co_{0,33}O₂;
- lithium, nickel, cobalt and aluminum containing lithium-ion battery cathode material, in particular LiNi_{0,8}Co_{0,15}Al_{0,05}O₂;
- lithium and titanium containing lithium-ion battery cathode material, in particular Li₄Ti₅O₁₂;
- lithium and iron containing lithium-ion battery cathode material, in particular Li₃Fe₂(PO₄)₃.

5. Process according to any one of the preceding claims, wherein the material is a lithium ore, in particular spodumene, petalite, lepidolite, eucryptite, amblygonite, or a mixture thereof.

6. Process according to any one of the preceding claims, wherein the polyol solvent is chosen from the group comprising ethylene glycol, diethylene glycol, triethylene glycol, tetraethylene glycol, propylene diol, liquid polyethylene glycols, such as polyethylene glycol 200 to 600, butylene glycol, in particular 1,3-butylene glycol and 1,4- butylene glycol, hexylene glycol and glycerol.

7. Process according to any one of the preceding claims, wherein the carbonate is at least one metal carbonate, in particular at least one alkali metal carbonate, more particularly sodium carbonate, potassium carbonate or their mixtures.

8. Process according to any one of the preceding claims, wherein the polyol solvent corresponds to a liquid L1 of the step a) of a previous extraction according to claim 1.

9. Process according to any one of the preceding claims, wherein the solvothermal treatment of step b) is performed at a temperature over the boiling point of the polyol solvent and under 500°C, notably at a temperature from 200 to 500°C, in particular from 220 to 500°C, more particularly from 220 to 400°C, for example at about 225°C.

10. Process according to any one of the preceding claims, wherein the solvothermal treatment of step b) is performed at a pressure above atmospheric pressure, for example 1.013 bar, and equal to or less than 5000, in particular at about 125 bar.

11. Process according to any one of the preceding claims, wherein the solvothermal treatment of step b) is performed for 1 hour to 1 week, in particular from 2 hours to 5 days, more particularly from 4 to 80 hours, notably when said autoclave is in batch configuration.

12. Process according to any one of the preceding claims, wherein the solid S1 obtained in step c) is prior to step e) washed with a solvent in which lithium carbonate is not soluble.

13. Process according to any one of the preceding claims, wherein the at least another metal is at least a magnetic metal, or at least a magnetic metal and at least a non magnetic metal, and wherein the separating step f) may comprise a magnetic separating sub-step f1), to isolate the at least a magnetic metal from the composition SP1, followed by a separating sub-step f2) corresponding to the separating step f) as defined above.

14. Process of lithium-ion battery cathode recycling comprising the steps as defined in claim 1 or 2, preceded by a step of recovery of a lithium-ion battery cathode material from a lithium-ion battery, said steps being optionally followed by a step of use of at least one of the above-mentioned metals in a new process or device.

15. Composition SP1 obtainable by the process defined in claim 4 or 5.

16. Composition comprising:
- a material chosen from lithium-ion battery cathode materials and lithium ores;
- a carbonate; and
- a polyol solvent.
